# EUROPEAN PATENT APPLICATION

(11) **EP 2 136 563 A2**
(43) Date of publication of application: **23.12.2009**
(21) Application number: 09007702.5
(22) Date of filing: 10.06.2009
(51) Int. Cl.: H04N 7/26

(54) **Method and system for adaptive deblocking for AVS1-P2**

(30) Priority: 20.06.2008 US 74560 P; 15.08.2008 US 192970
(71) Applicant: Broadcom Corporation, Irvine, CA 92617 (US)
(72) Inventor: Yang, Michael Zhijie, Beijing (CN); Chen, Sherman Xuemin, Irvine, CA 92617 (US)
(74) Representative: Jehle, Volker Armin

(57) **Abstract**

Aspects of a method and system for adaptive deblocking for AVS1-P2 are provided. An AVS decoder may receive a bitstream comprising filtering parameters and plural macroblocks. The plural macroblocks may be decoded to form decoded pictures to be processed based on the filtering parameters and corresponding adjusted quantization parameters (adj_qp) calculated from the perspective decoded pictures. The adj_qp of a decoded picture may be determined based on the type of the decoded picture and associated reference pictures of the decoded picture. A filtering strength may be determined and/or adjusted based on the filtering parameters, the slice boundary information, the adj_qp, and user control information. The decoded picture may be filtered via an outer-loop deblocking filter with the determined filtering strength to reduce macroblock and/or slice boundary artifacts of the decoded picture. The outer-loop deblocking filter may be turned on or off in responsive to the determined filter strength level.

## Description

### CROSS-REFERENCE TO RELATED APPLICATIONS/INCORPORATION BY REFERENCE

This patent application makes reference to, claims priority to and claims benefit from United States Provisional Patent Application Serial No. 61/074,560 filed on June 20, 2008.

The above stated patent application is hereby incorporated herein by reference in its entirety.

### FIELD OF THE INVENTION

Certain embodiments of the invention relate to signal processing for video coding systems. More specifically, certain embodiments of the invention relate to a method and system for adaptive deblocking for AVS1-P2.

### BACKGROUND OF THE INVENTION

The Audio Video Coding Standard of China (AVS) video standard is a streamlined, highly efficient video coder employing the latest video coding tools and dedicated to coding HDTV content. AVS has been designed to provide near optimum performance and a considerable reduction in complexity. AVS will therefore provide low-cost implementations. AVS applications include broadcast TV, HD-DVD, and broadband video networking.

AVS is built on a layered data structure representing traditional video data. This structure is mirrored in the coded video bitstream. Generally a sequence consists of several GOP (group of pictures) starting with a sequence header, each of which could be a random access point. The other layers between a GOP and a macroblock are picture and slice.

AVS video (Part 2) is a hybrid coding based on spatial and temporal prediction, integer transform and entropy coding. AVS may enable coding of pictures with a rectangular format up to 16K x 16K pixels in size. Pixels are coded in Luminance-Chrominance format (YCrCb) and each component can have precision of 8 bits. The basic unit for encoding/decoding in this standard is a macroblock, which comprising one 16x16 luma block and two 8x8 chroma blocks. In this coding scheme, independent block-based coding can probably lead to noticeable discontinuities between the block boundaries of the reconstructed image or video, which is also known as a "blocking" artifact. To reduce the blocking artifacts and improving the video quality, various new features may be adopted in AVS, of which an adaptive deblocking filter may be used. AVS requires a deblocking filter within the motion compensation prediction loop of AVS codec to guarantee visual quality at a certain level. Since deblocking filter is within the motion compensation prediction loop, the deblocking filter may be often referred to as an "inner-loop deblocking filter".

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A method and/or system for adaptive deblocking for AVS1-P2, substantially as shown in and/or described in connection with at least one of the figures, as set forth more completely in the claims.
According to an aspect, a method of processing data is provided, the method comprising
receiving a bitstream comprising one or more filtering parameters and a plurality of macroblocks that forms a picture;
decoding said plurality of macroblocks to generate a decoded picture; and
processing said decoded picture based on said one or more filtering parameters and one or more parameters calculated from said generated decoded picture.
Advantageously, said bitstream is an AVS1-P2 bitstream or a H.264 bitstream.
Advantageously, the method further comprises calculating an adjusted quantization parameter for said decoded picture.
Advantageously, the method further comprises determining said adjusted quantization parameter based on picture type of said decoded picture.
Advantageously, the method further comprises determining said adjusted quantization parameter based on said decoded picture and one or more reference pictures of said decoded picture.
Advantageously, the method further comprises determining a filtering strength for said decoded picture based on said one or more filtering parameters, and/or said adjusted quantization parameter, and/or user control information.
Advantageously, the method further comprises filtering said decoded picture based on said determined filtering strength.
Advantageously, the method further comprises adjusting said determined filtering strength to reduce macroblock boundary artifacts and/or slice boundary artifacts.
Advantageously, the method further comprises turning on or off said processing based on said determined filtering strength.
According to an aspect, a system of processing data comprises:
one or more processors operable to receive a bitstream comprising one or more filtering parameters and a plurality of macroblocks that forms a picture;
said one or more processors are operable to decode said plurality of macroblocks to generate a decoded picture; and
said one or more processors are operable to process said decoded picture based on said one or more filtering parameters and one or more parameters calculated from said generated decoded picture.
Advantageously, said bitstream is an AVS1-P2 bitstream or a H.264 bitstream.
Advantageously, said one or more processors are operable to calculate an adjusted quantization parameter for said decoded picture.
Advantageously, said one or more processors are operable to determine said adjusted quantization parameter based on picture type of said decoded picture.
Advantageously, said one or more processors are operable to determine said adjusted quantization parameter based on said decoded picture and one or more reference pictures of said decoded picture.
Advantageously, said one or more processors are operable to determine a filtering strength for said decoded picture based on said one or more filtering parameters, and/or said adjusted quantization parameter, and/or user control information.
Advantageously, said one or more processors are operable to process said decoded picture based on said determined filtering strength.
Advantageously, said one or more processors are operable to adjust said determined filtering strength to reduce macroblock boundary artifacts and/or slice boundary artifacts.
Advantageously, said one or more processors are operable to turn on or off said processing based on said determined filtering strength.
According to an aspect, a machine-readable storage is provided having stored thereon, a computer program having at least one code section for processing data, the at least one code section being executable by a machine for causing the machine to perform steps comprising:
receiving a bitstream comprising one or more filtering parameters and a plurality of macroblocks that forms a picture;
decoding said plurality of macroblocks to generate a decoded picture; and
processing said decoded picture based on said one or more filtering parameters and one or more parameters calculated from said generated decoded picture.
Advantageously, said bitstream is an AVS1-P2 bitstream or a H.264 bitstream.
Advantageously, said at least one code section comprises code for calculating an adjusted quantization parameter for said decoded picture.
Advantageously, said at least one code section comprises code for determining said adjusted quantization parameter based on picture type of said decoded picture.
Advantageously, said at least one code section comprises code for determining said adjusted quantization parameter based on said decoded picture and one or more reference pictures of said decoded picture.
Advantageously, said at least one code section comprises code for determining a filtering strength for said decoded picture based on said one or more filtering parameters, and/or said adjusted quantization parameter, and/or user control information.
Advantageously, said at least one code section comprises code for filtering said decoded picture based on said determined filtering strength.
Advantageously, said at least one code section comprises code for adjusting said determined filtering strength to reduce macroblock boundary artifacts and/or slice boundary artifacts.
Advantageously, said at least one code section comprises code for turning on or off said processing based on said determined filtering strength.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a block diagram illustrating an exemplary AVS CODEC system, in accordance with an embodiment of the invention.

FIG. 2 is illustrating an exemplary AVS1-P2 access unit structure, in accordance with an embodiment of the invention.

FIG. 3 is a block diagram illustrating an exemplary AVS1-P2 decoder framework, in accordance with an embodiment of the invention.

FIG. 4 is an exemplary flow diagram illustrating techniques that compute quantization parameters for AVS video, in accordance with an embodiment of the invention.

FIG. 5 is an exemplary flow diagram illustrating an adaptive boundary strength-decision tree for AVS1-P2 video, in accordance with an embodiment of the invention.

### DETAILED DESCRIPTION OF THE INVENTION

Certain embodiments of the invention may be found in a method and system for adaptive deblocking for AVS1-P2. Various aspects of the invention may enable receiving an encoded bitstream at an AVS decoder. The received encoded bitstream may comprise one or more picture processing related filtering parameters and a plurality of macroblocks, which forms a picture. The AVS decoder may be enabled to decode each of the plurality of macroblocks to form one or more decoded picture. Each of the decoded pictures may be processed based on the filtering parameters extracted from the received bitstream and corresponding quantization parameter calculated from the respective decoded pictures. An adjusted quantization parameter (adj_qp) for a decoded picture may be calculated at the AVS decoder based on the type of the decoded picture and associated one or more reference pictures of the decoded picture. A filtering strength used for processing the decoded picture may be determined based on the filtering parameters, the adj_qp, and user control information. The decoded picture may be filtered with the determined filter strength via an outer-loop deblocking filter. The filter strength of the decoded picture may be adjusted adaptively based on the received filter parameters, the calculated adj_qp, and user control information, to reduce macroblock boundary artifacts and/or slice boundary artifacts of the decoded picture. The outer-loop deblocking filter may be turned on or off in responsive to the determined filter strength level.

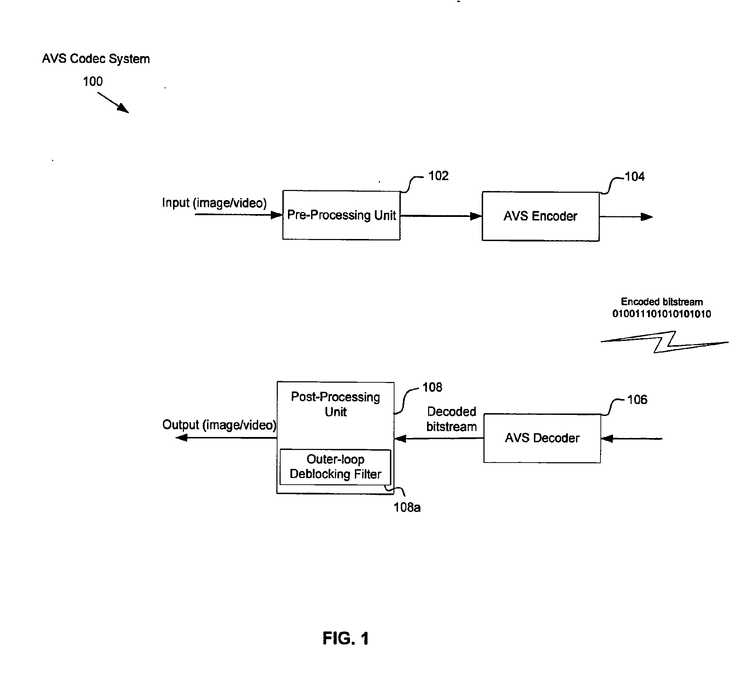

FIG. 1 is a block diagram illustrating an exemplary AVS CODEC system, in accordance with an embodiment of the invention. Referring to FIG. 1, there is shown an AVS codec system comprising a pre-processing unit 102, an AVS encoder 104, an AVS decoder 106, and a post-processing unit 108 comprising an outer-loop deblocking filter 108a.

The pre-processing unit 102 may comprise suitable logic, circuitry and/or code that may be enabled to remove some relatively insignificant high frequency components before encoding to improve coding efficiency and reduce the likelihood of artifacts generation in the video coding process.

The AVS encoder 104 may comprise suitable logic, circuitry and/or code that may be enabled to convert a video stream into a compressed format such as an AVS format by using as few bits as possible while maintaining acceptable visual appearance. The basic coding unit in AVS1-P2 may be a macroblock. An AVS-P2 bitstream may have a hierarchy of layers. Generally an AVS sequence may comprise several group of pictures (GOPs), each of which may have a random access point. The other layers between a GOP and a macroblock may be picture and slice. The AVS sequence layer may provide an entry point into a coded bitstream.

The AVS sequence layer may comprise a set of system parameters to initialize and set corresponding decoder systems. The picture layer may provide the coded representation of a video frame. The picture layer may comprise a header with mandatory and optional parameters and optionally with user data. AVS specifies a plurality of picture types comprising intra pictures (I-pictures), predicted pictures (P-pictures), and interpolated pictures (B-Pictures). The slice structure may provide the lowest-layer mechanism for resynchronizing the AVS1-P2 bitstream in case of transmission error. The slice header may comprise information on macroblock level processing for associated macroblock. For instance, the status of the inner-loop deblocking filter inside, for example, an AVS decoder 106. The slices may each comprise an arbitrary number of raster-ordered rows of macroblocks. A macroblock may comprise the luminance and chrominance component pixels that may collectively represent a 16x16 region of the picture, for example. The macroblock layer may be the primary unit of adaptability in AVS codec and the primary unit of motion compensation. The macroblock header may comprise information about the coding mode, the motion vectors, and/or the quantization parameter (QP) of the corresponding macroblock.

The inner-loop deblocking filter defined in the AVS1-P2 standard may be highly adaptable to remove blocking artifacts to improve the video quality. The inner-loop deblocking filter may be a non-linear 1 D filter selectively applied across the edges of blocks in order to smooth block artifacts. The filter parameters may be signaled explicitly in the compressed bitstream on a picture basis, or they may be deduced by the decoder based on the local conditions, allowing it to flexibly alter the filter strength and enable or disable the filter.

The post-processing unit 108 may comprise suitable logic, circuitry and/or code that may be enabled to process decoded pictures and converted to the LCD input format for displaying. The post-processing unit 108 may be enabled to enhance the picture SNR (signal-to-noise ratio) and the subjective image quality via various post-filtering algorithms. In this regard, the post-processing unit 108 may comprise an outer-loop deblocking filter 108a outside the coding loop. The outer-loop deblocking filter 108a may be applied before reconstructing and displaying the macroblocks. The outer-loop deblocking filter 108a may be enabled to remove visible block structures on the edges of, for example, the 8x8 blocks, caused by block-based transform coding and motion estimation. The outer-loop deblocking filter 108a may be adaptively adjusted to filter the macroblock boundaries adaptively or to be turned on/off based on the information from the AVS decoder 106 and/or via a user noise reduction control.

In operation, the pre-processing unit 102 may receive a video bitstream from, for example, a camcorder or other video sources. The pre-processing unit 102 may be enabled to process the received bitstream by, for example, removing some relatively insignificant high frequency components before encoding to improve coding efficiency and reduce the likelihood of artifacts generated in the video coding process. The AVS encoder 104 may be enabled to convert the pre-processed bitstream into an AVS-P2 bit stream. Video data processing parameters such as, for example, loop_filter disable which may be used to indicate whether the inner-loop deblocking filter 108a may need to be enabled or disabled, and slice boundary information (slice_boundary_info) which may be used to indicate whether the pixels may be on slice boundary of associated picture, may be embedded in the AVS1-P2 bitstream and pass to the AVS decoder 106.

The AVS decoder 108 may extract related inner-loop deblocking filter parameters such as loop_filter disable and slice_boundary_info from the received AVS1-P2 bitstream. The AVS decoder 108 may process and convert the received AVS1-P2 bitstream back into decoded pictures. An adjusted AP parameter (adi_qp), which may indicate how much the AP of a decoded picture may need to be adjusted, may be calculated at the AVS decoder 106 for each decoded picture. Various parameters and/or signals such as the loop_filter_disable, the slice_boundary_info, and the calculated adj_qp together with the decoded picture may be communicated to the post-processing unit 108. The received parameters such as the loop_filter_disable, the slice_boundary_info, and the calculated adj_qp may be used to control the filtering strength of the post-processing unit 108. In addition, the user may be capable of controlling the filtering strength of the post-processing unit 108 by sending a user noise reduction control parameter usr_bnr via a user interface of the corresponding device. The post-processing unit 108 may process the decoded picture via the outer-loop deblocking filtering 108a and convert the resulted bitstream to the LCD format for display.

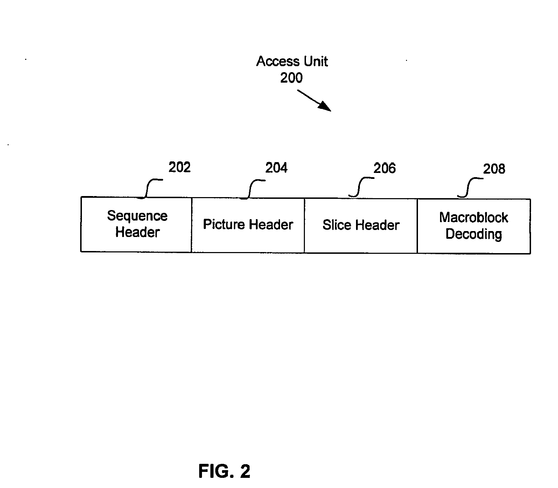

FIG. 2 is illustrating an exemplary AVS1-P2 access unit structure, in accordance with an embodiment of the invention. Referring to FIG. 2, there is shown an AVS access unit (AU) 200 comprising a sequence header (SH) 202, a picture header 204, a slice header 206, and a macroblock decoding 208.

The sequence header 202 may comprise information related to a sequence of pictures and may be applied to a series of consecutive coded video pictures. The sequence header 202 may comprise the parameters such as bit-rate and sample rate required to initialize the AVS decoder 106, synchronize the AVS decoder 106 to, and decode the received decoded bitstream.

The picture header 204 may comprise model parameters such as loop_filter- disable in AVS codec. The information in the picture header 204 may be unchanged for decoding of the entire picture.

The slice header 206 may comprise information required for processing macroblocks associated to the slice. Information in the slice header 206 may comprise inner-deblocking filter parameters such as slice_boundary_info.

For decoding a picture of an AVS1-P2 bitstream, the AVS decoder 106 may extract embedded inner-deblocking filter parameters such as loop_filter_disable in the picture header 204 and slice_boundary_info in the slice header 206 from the received picture, and calculate an adjusted QP of the current picture (adj_qp). The adj_qp may be calculated based on information in the picture header 204, the slice header 206, and a plurality macroblocks to be decoded in the macroblock decoding 208. The extracted loop_filter_disable and slice_boundary_info may be passed to the post-processing unit 108 together with the calculated adj_qp for adaptively outer-deblocking filtering boundaries of associated macroblocks, and/or slices in the decoded picture.

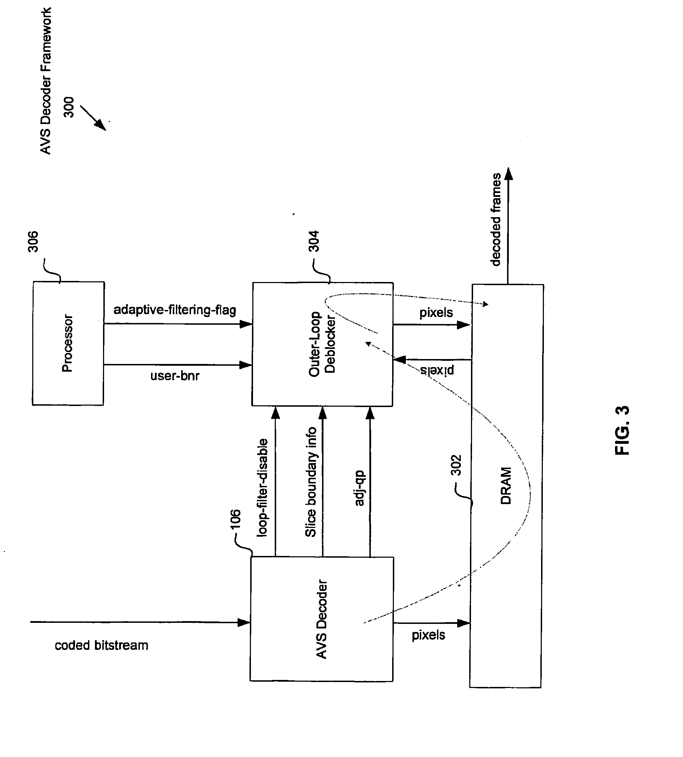

FIG. 3 is a block diagram illustrating an exemplary AVS1-P2 decoder framework, in accordance with an embodiment of the invention. Referring to FIG. 3, there is shown an AVS decoder framework 300 comprising the AVS decoder 106, a DRAM (Dynamic Random Access Memory) 302, an outer-loop deblocker 304, and a processor 306.

The DRAM 106 may comprise suitable logic, circuitry and/or code that may enable storage of information such as executable instructions and data that may be utilized by the AVS decoder 106. The executable instructions may comprise algorithms that may be enabled to store real-time video bitstream automatically or upon request. The DRAM 106 may be adapted to output different length of the elementary video bitstream as may be requested by the AVS decoder 106 and/or the outer-loop deblocker 304. The DRAM 106 may comprise low latency nonvolatile memory such as flash memory and/or other suitable electronic data storage.

The outer-loop deblocker 304 may comprise suitable logic, circuitry and/or code that may be enabled to remove block noises associated with decoded pictures from the AVS decoder 106. The strength of the outer-loop deblocking filtering of the outer-loop deblocker 304 may be adaptively controlled via the AVS decoder 106 and users. For example, the outer-loop deblocker 304 may use information on slice boundaries, the block texture, pixel gradients and transitions to be adaptive to picture pixel gradients across the block boundary and to the state of the quantization parameters. The outer-loop deblocker 304 may flexibly alter the filter strength or even enable/disable the filter based on the information from the AVS decoder 106 and user. The outer-loop deblocker 304 may be enabled to read and/or write video data from/to the DRAM 106.

The processor 306 may comprise suitable logic, circuitry and/or code that may provide control instructions for processing received signals from users and provide information to the outer-loop deblocker 304 to adjust the filtering strength or turn the filter on/off.

In operation, for an incoming AVS1-P2 bitstream, the AVS decoder 106 may extract filtering parameters such as loop_filter_disable and slice_boundary_info from the received AVS1-P2 bitstream and calculated associated adj_qp. The AVS decoder 108 may process and convert the received AVS1-P2 bitstream to one or more decoded pictures (reconstructed pictures). Slices of each of the decoded pictures, together with associated slice information such as the macroblock address of the 1 st macroblock (MB) of the slice, may be passed to the DRAM 302 and stored. The DRAM 302 may be adapted to wait for all the slices of a decoded picture to arrive before start post-processing the picture. Filtering parameters for image post-processing, for example, loop_filter_disable, and slice_boundary_info, may be extracted from the encoded bitstream at the AVS decoder 106. The AVS decoder 106 may calculated adj_qp for each decoded picture and passed to the outer-loop deblocker 304 together with the extracted loop_filter_disable and slice_boundary_info. A filtering strength of the outer-loop deblocker 304 may be controlled by sending, for example, a user-bnr and/or an adaptive-filtering-flag via the processor 306. The outer-loop deblocker 304 may be enabled to read the decoded picture from the DRAM 302 for post-processing. The outer-loop deblocker 304 may use information from both the AVS decoder 106 and user control parameters via the processor 306 to adaptively filter the block boundaries of the decoded picture. The filtered picture may be passed to the DRAM 302 and stored for subsequent processing and displaying.

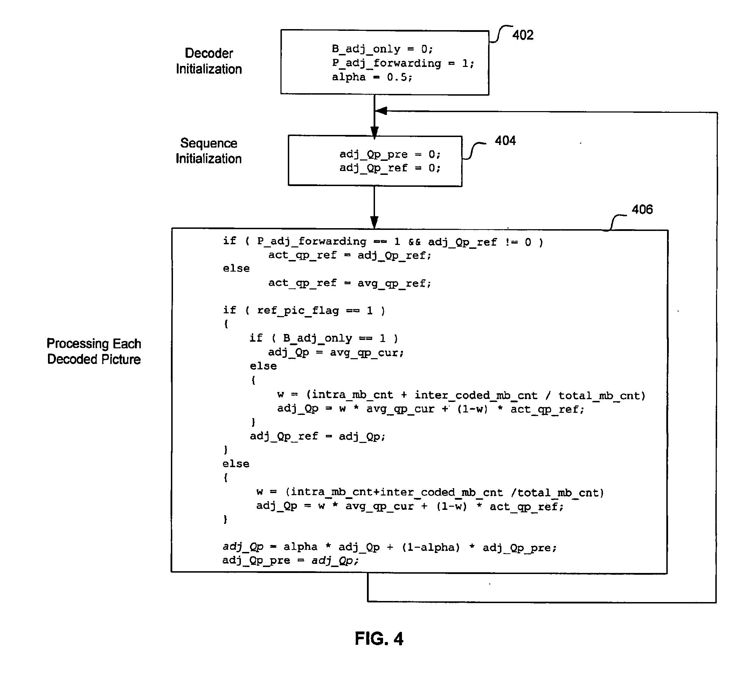

FIG. 4 is an exemplary flow diagram illustrating techniques that compute adjusted quantization parameters for AVS video, in accordance with an embodiment of the invention. Referring to FIG. 4, there is shown a process for calculating adj_qp based on the picture types. Table 1 illustrates exemplary parameters that may be utilized for the processing.

**Table 1 Adaptive Outer-loop deblocking filter parameters**

| Parameter | Description |
|---|---|
| alpha | a floating number in the range of 0 to 1 inclusive. |
| adj_qp | adjusted QP of the current picture. |
| adj_qp_pre | adjusted QP of the previous picture. |
| adj_qp_ref | adjusted QP of the reference picture of the current picture. |
| adaptive_filtering_flag | 1: outer-loop deblocking filter enabled |
| | 0: otherwise. |
| act_qp_ref | average quantization parameter (QP) of the reference picture(s) of current picture. |
| avg_qp_ref | average quantization parameter(QP) of the reference picture(s) of current picture. |
| B_adj_only | 1: QP adjustment is only performed for B pictures while the avg_qp_cur is used directly for I/P pictures. |
| | 0: otherwise. |
| inter_coded_mb_cnt | total number of inter macroblocks with non-zero coded block pattern in the current picture. |
| intra_mb_cnt | total number of intra macroblocks in the current picture. |
| loop_filter _disable | 1: inner-loop deblocking filter is disabled. |
| | 0: otherwise. |
| P_adj_forwarding | 1: the adjustment of Qp of a P picture to be used as "Qp of reference picture" in the following pictures. |
| | 0: otherwise. |
| ref_pic_flag | 1: the current picture is a reference picture. |
| | 0: otherwise. |
| total_mb_cnt | total number of macroblocks in the current picture. |
| user_bnr | user block noise reduction control parameter. |

The exemplary step for calculating adj_qp may start with the step 402, where during initialization of the AVS decoder 106, the parameters B_adj_only, P_adj_forwarding, and alpha may be set. The parameter B_adj_only may have a binary setting of 0 or 1. The parameter B_adj_only may be set only when the QP adjustment (calculation of adj_Qp) may be performed only for B pictures while the avg_qp_cur may be used directly for I pictures and P pictures. The parameter P_adj_forwarding may control whether the adj_qp or avg_qp_cur value of a reference picture may be used in deriving the adjusted QP value for the following reference pictures. In other words, when the parameter P_adj_forwarding may be set, the adjustment of QP of a P picture may be carried forward and used as "QP of reference picture" in the following pictures. The parameter alpha may be a floating number in the range of 0 to 1 representing coefficients of, for example, a two-tap IIR filter used to calculate the adj_qp to be used smooth out large fluctuations of the adj_qp from picture to picture.

In step 404, at the beginning of each video sequence, initialize the parameters adj_qp_pre and adj_qp_ref by setting adj_qp_pre = 0 and adj_qp_ref = 0, respectively. The parameter adj_qp_pre may indicate the adjusted QP of the most recent picture at the display and the parameter adj_qp_ref may represent the average QP of the most recent reference pictures of the current P picture.

In step 406, the parameter adj_qp may be calculated for the current picture. The parameter adi_qp may be computed using a weighted average of avg_qp_cur and avg_qp_ref of the picture.

The avg_qp_cur of the picture may be calculated utilizing the following relationship:
avg_qp_cur = sum of Qp of each macroblock / total_mb_cnt, where the QP may be the average QP for each macroblock of the picture.

The parameter avg_qp_ref may be derived based on the picture type. For an I picture, the avg_qp_ref may be set to be the same as the avg_qp_cur of the picture. For a P picture, the avg_qp_ref may take the value of avg_qp_cur of the most recent reference picture (I or P picture). For a B picture, the avg_qp_ref may be simply the arithmetic average of the avg_qp_cur values of the two most recently decoded reference pictures. Ideally, the avg_qp_ref for a B picture may be a weighted average of the QP of the reference I and P pictures depending on the motion vector direction (forward/backward/bi-direction), but a simple arithmetic average may be a reasonable approximation as the QP for I and P pictures may be fairly close in most cases. In instances where the first consecutive B-pictures may immediately follow the first coded I-frame in a open GOP (group of pictures), the avg_qp_ref for these B-pictures may be set to the avg_qp_cur of the first decoded I-frame as there may be no P picture presently available for reference in the current GOP.

The process in step 406 may be repeated for each picture associated with the received GOP in step 406. Subsequent to step 406, step 404 may be executed for next new GOP.

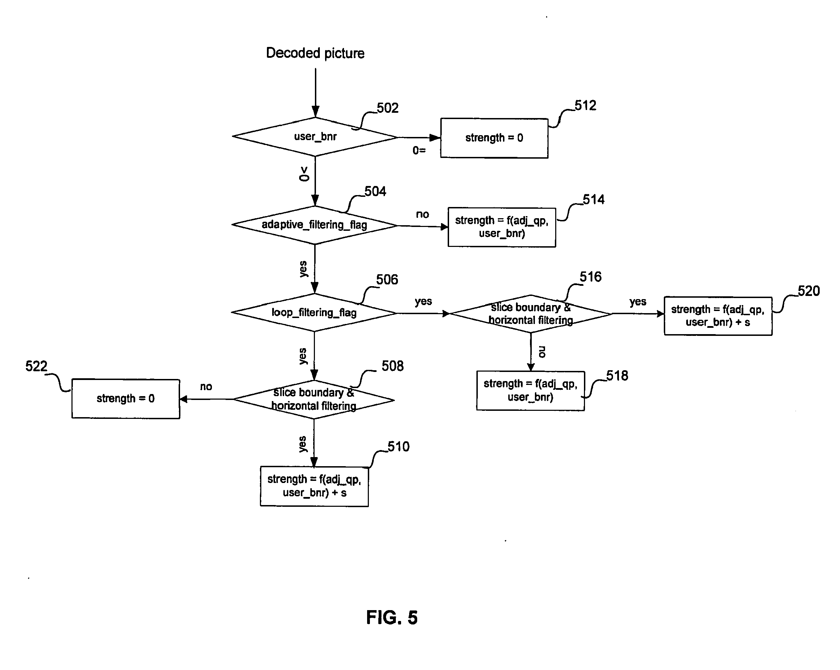

FIG. 5 is an exemplary flow diagram illustrating an adaptive boundary strength-decision tree for AVS1-P2 video, in accordance with an embodiment of the invention. Referring to FIG. 5, the exemplary steps may begin with the step 502 where it may be determined whether the user_bnr may be set. The user_bnr may be a user block noise reduction control parameter and may be set to different number such as 0, 1, and 2 to indicate the different filtering strength levels of the outer-loop deblocker 304. Settings for user_bnr of 0, or,1, or, 2 may correspond to a zero strength outer-loop deblocking filtering (disabled outer-loop deblocker 304), a lower strength outer-loop deblocking filtering, and a higher strength outer-loop deblocking filtering, respectively. Instances where the user_bnr may be set to equal 0, the in step 512, the outer-loop deblocker 304 may be disabled and hence the filtering strength may be set to zero. In step 502, instances where the user_bnr may be set to equal a number greater than 0, the in step 504, where determine whether the adaptive_filtering_flag may be set. In instances where adaptive_filtering_flag may be set, then in step 506, where determining whether the loop_filter_flag may be set.

In instances where the loop_filter_flag may be set, then in step 508, it may be determined whether the on-going pixels of the picture may cross slice boundaries and whether the outer-loop deblocker 304 may do outer-loop horizontal filtering. If true, then in step 510, where set filtering strength for the outer-loop deblocker 304 to be f(adj_qp, user_bnr) + s, where f() may be a function of adj_qp and user_bnr, s may be a positive constant. Selections of use_bnr, f(), and s may be implementation dependent. In step 504, in instances where the adaptive_filtering_flag may not be set, then in step 514, where set filtering strength for the outer-loop deblocker 304 to be f(adj_qp, user_bnr). In step 506, in instances where the loop_filter_flag may not be set, then in step 516, it may be determined whether the on-going pixels of the picture may cross slice boundaries and whether the outer-loop deblocker 304 may execute outer-loop horizontal filtering. In instances where the on-going pixels of the picture may cross slice boundaries and/or the outer-loop deblocker 304 may execute outer-loop horizontal filtering, then in step 520, the filtering strength for the outer-loop deblocker 304 may be set to f(adj_qp, user_bnr) + s. In step 516, in instances where the on-going pixels may not cross slice boundaries and/or the outer-loop deblocker 304 may not execute horizontal filtering, then in step 518, the filtering strength for the outer-loop deblocker 304 may be set to f(adj_qp, user_bnr). In step 508, in instances where the on-going pixels may not cross slice boundaries and/or the outer-loop deblocker 304 may not execute horizontal filtering, then in step 522, the filtering strength for the outer-loop deblocker 304 may be set to 0.

The process in FIG.5 may demonstrate how the outer-loop deblocker 304 may be used to adaptively filter pixels of a decoded picture based on user noise reduction control as well as the location information associated to the decoded picture such as, for example, the status of the inner-loop deblocking filter, slice boundary information (slice_boundary_info), and picture quantization parameter adjustment needed. For example, the outer-loop deblocker 304 may be enabled or disabled based on settings for user_bnr. In instances when user_bnr may be set to 0, the outer-loop deblocker 304 may be disabled and hence the strength may be set to zero. In instances when the adaptive_filter_flag may set to, for example, 1 or 2, all boundaries of the decoded picture may be filtered with strength f(adj_qp, user_bnr), not shown in FIG.5, or determine the filtering strength based on the inner-loop deblocking filter status. For example, in instances when the adaptive_filter_flag may be set, the strength may be set adaptively according to the loop_filter_disable and slice_boundary_info. If the loop_filter_disable is not set, the inner-loop deblocking filter may be enabled, and hence only slice boundaries may be filtered by the outer-loop deblocker 304. Since slice boundaries may need more strong filtering, the strength may be set to be f(adj_qp, user_bnr) + s where s may be a positive constant value. In instances when the loop_filter_disable may be set, the inner-loop deblocking filter may be disabled, and hence all block boundaries may need to be filtered, where slice boundaries in the decoded picture may use stronger filtering than other boundaries of the decoded picture.

The adaptive strength decision methods described in FIG.5 may apply to any multi-level deblocking filtering algorithm such as H.264.

Aspects of a method and system for adaptive deblocking for AVS1-P2 are provided. In accordance with various embodiments of the invention, the AVS decoder 106 may receive an encoded bitstream from the AVS encoder 104. The received encoded bitstream may comprise one or more embedded filtering parameters such as inner-loop-flag in the picture header 204 and slice_boundary_info in the slice header 206, and a plurality of macroblocks in the macroblocking 208, which forms a picture. The AVS decoder 106 may be operable to decode each of the plurality of macroblocks in received bitstream to form/generate decoded pictures. Each of the decoded pictures may be processed in the post-processing unit 108 based on the filtering parameters extracted from the received bitstream and corresponding quantization parameters calculated from the perspective decoded pictures. An adjusted quantization parameter (adj_qp) of a decoded picture may be calculated at the AVS decoder 106. The adj_qp may indicate a noise level associated to the corresponding decoded picture. The adj_qp may be determined or calculated based on the type of the input decoded picture and associated one or more reference pictures of the input decoded picture as described in FIG.4. A filtering strength used for processing each of the decoded pictures may be determined based on the filtering parameters extracted from the received bitstream, the adj_qp, and user control information such as user_bnr as described in FIG.5. Each of the decoded pictures may be filtered with the corresponding determined filter strength via the outer-loop deblocking filter 108a. The filter strength of a decoded picture may be adjusted adaptively based on the received filter parameters, the adj_qp, and user control information, to reduce macroblock boundary artifacts and/or slice boundary artifacts of the decoded picture. The outer-loop deblocking filter 108a may be turned on or off indicated by the determined filter strength level. For instance, the outer-loop deblocking filter 108a may be turned on or off in responsive to the determined filter strength level of none-zero or zero, respectively.

Another embodiment of the invention may provide a machine and/or computer readable storage and/or medium, having stored thereon, a machine code and/or a computer program having at least one code section executable by a machine and/or a computer, thereby causing the machine and/or computer to perform the steps as described herein for adaptive deblocking for AVS1-P2.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method of processing data, the method comprising
receiving a bitstream comprising one or more filtering parameters and a plurality of macroblocks that forms a picture;
decoding said plurality of macroblocks to generate a decoded picture; and
processing said decoded picture based on said one or more filtering parameters and one or more parameters calculated from said generated decoded picture.

2. The method according to claim 1, wherein said bitstream is an AVS1-P2 bitstream or a H.264 bitstream.

3. The method according to claim 1, comprising calculating an adjusted quantization parameter for said decoded picture.

4. The method according to claim 3, comprising determining said adjusted quantization parameter based on picture type of said decoded picture.

5. The method according to claim 3, comprising determining said adjusted quantization parameter based on said decoded picture and one or more reference pictures of said decoded picture.

6. The method according to claim 3, comprising determining a filtering strength for said decoded picture based on said one or more filtering parameters, and/or said adjusted quantization parameter, and/or user control information.

7. A system of processing data, the system comprising
one or more processors operable to receive a bitstream comprising one or more filtering parameters and a plurality of macroblocks that forms a picture;
said one or more processors are operable to decode said plurality of macroblocks to generate a decoded picture; and
said one or more processors are operable to process said decoded picture based on said one or more filtering parameters and one or more parameters calculated from said generated decoded picture.

8. The system according to claim 7, wherein said bitstream is an AVS1-P2 bitstream or a H.264 bitstream.

9. The system according to claim 7, wherein said one or more processors are operable to calculate an adjusted quantization parameter for said decoded picture.

10. A machine-readable storage having stored thereon, a computer program having at least one code section for processing data, the at least one code section being executable by a machine for causing the machine to perform steps comprising:
receiving a bitstream comprising one or more filtering parameters and a plurality of macroblocks that forms a picture;
decoding said plurality of macroblocks to generate a decoded picture; and
processing said decoded picture based on said one or more filtering parameters and one or more parameters calculated from said generated decoded picture.
